# EUROPEAN PATENT APPLICATION

(11) **EP 1 758 117 A2**
(43) Date of publication of application: **28.02.2007**
(21) Application number: 06017796.1
(22) Date of filing: 25.08.2006
(51) Int. Cl.: G11B 20/12, G11B 7/00

(54) **Recording apparatus and recording method**

(30) Priority: 26.08.2005 JP 2005246059
(71) Applicant: SONY CORPORATION, Tokyo (JP)
(72) Inventor: Yamamoto, Masaaki, Shinagawa-ku, Tokyo (JP); Yorimoto, Kenji, Shinagawa-ku, Tokyo (JP)
(74) Representative: Melzer, Wolfgang

(57) **Abstract**

A recording apparatus for performing recording on a data-rewritable recording medium (1) having at least one recording layer includes a recorder configured to record data on the recording layer; and a controller configured to control the recorder so that dummy data is recorded in an order opposite to the order in which user data is recorded.

## Description

### CROSS REFERENCES TO RELATED APPLICATIONS

The present invention contains subject matter related to Japanese Patent Application JP 2005-246059 filed in the Japanese Patent Office on August 26, 2005, the entire contents of which are incorporated herein by reference.

### BACKGROUND OF THE INVENTION

### 1. Field of the Invention

The present invention relates to a recording apparatus for performing recording on an optical disc recording medium on which data can be rewritten and to a recording method for use with the recording apparatus.

### 2. Description of the Related Art

As optical recording media capable of optically recording or reproducing information, optical disc recording media are known.

As such optical disc recording media, digital versatile discs (DVDs) have become very popular. As DVDs, a play-only DVD-ROM disc in which information is recorded as a combination of embossed pits and lands, a DVD-R disc and a DVD+R disc on which one-time-only recording is possible by using a dye-change film for a recording layer, and a DVD-RW disc and a DVD+RW disc on which data can be rewritten by using a phase-change film for a recording layer, are known.

Among the above, DVD+RW is a standard that was introduced after DVD-RW, which relates to a data-rewritable disc in the same manner. As a consequence, the DVD+RW has improved ease of use over the DVD-RW.

For example, in DVD+RW, ways and means for shortening the time necessary to perform the process of formatting discs have been devised.

In a rewritable disc such as a DVD+RW disc, in order that playback in a play-only apparatus becomes possible, a so-called formatting process, in which portions other than those in which user data is recorded are filled in with dummy data formed of, for example, all "0" data, is performed in a data area in which user data should be recorded.

In the related art, such a formatting process for ensuring media compatibility with such a playback apparatus is performed on an entire disc prior to the recording of user data. In the case of DVD+RW, a formatting process does not necessarily need to be performed prior to the recording of user data. This makes it possible to instantly start recording when the recording of user data is instructed immediately after the DVD+RW disc is loaded. Thus, the time until recording is started can be shortened. At this time, the formatting process for the remaining portions of the disc is automatically performed in an idle status in which the drive is not writing or reading data. That is, as a result of performing such a formatting process in the background, the time a user has to wait is substantially shortened, and as a result, ease of use is improved. Such a formatting technique is called background formatting.

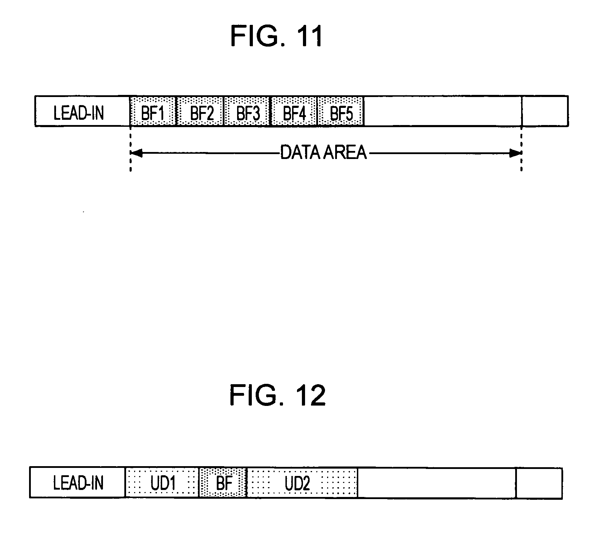

Fig. 11 illustrates such a background formatting process in the case of a DVD+RW disc.

Here, a DVD+RW disc is shown in the form of an area structure. A lead-in area shown in Fig. 11 is located in the innermost peripheral portion, and user data is recorded from this lead-in area toward the outer peripheral portion. Such an area from the lead-in area toward the outer peripheral area is called a data area.

Fig. 11 shows an example in which a drive is placed in an idle state after a disc is loaded, and in response to this state, background formatting is performed.

As shown in Fig. 11, in a DVD+RW disc of the related art, dummy data is recorded as background formatting in units of predetermined blocks BF sequentially from the recording start position (immediately after the lead-in area) of user data.

Here, it is assumed that, for example, recording of a particular data file as user data is instructed from the state in which background formatting is performed up to a block BF5 in the manner shown in Fig. 11, and recording of user data UD1 and UD2 is performed as shown in Fig. 12.

At this time, when a data file is to be recorded on a blank disc, there is a high possibility that, within the data area, the user data UD is recorded in a so-called vermiculated state as shown in Fig. 12. That is, when a UDF (Universal Disc Format) is adopted, in particular, as the user data UD1 shown in Fig. 12, file management information is recorded in the innermost peripheral area of the data area following the lead-in area. At this time, since the data file as actual data is not always recorded in an area adjacent to the recording area of the management information, there is a high possibility that the user data UD1 recorded in the innermost peripheral area and the user data UD2 as such actual data are recorded with a spacing therebetween.

When such a vermiculated state is reached, in a state in which background formatting has not been performed, the section between the user data UD1 and the user data UD2 is left unrecorded. However, since background formatting shown in Fig. 11 has been performed, this portion becomes formatted and thus, after user data is recorded, this portion does not need to be newly formatted. That is, as a result of performing background formatting in this manner, the formatting time necessary at the time of disc ejection is shortened.

Examples of the related art include Japanese Unexamined Patent Application Publication No. 1999-134799.

### SUMMARY OF THE INVENTION

As described above, the formatting time necessary at the time of disc ejection can be shortened as a result of performing background formatting. However, in the background formatting technique of the related art, since formatting is performed in accordance with the order in which user data is recorded as described with reference to Fig. 11, the formatted portions are likely to not be effectively used.

That is, in the case of an example shown in Fig. 12, only the section between the user data UD1 and the user data UD2 is effectively used, and the other portions becomes uselessly formatted portions as a result of the user data UD being overwritten.

When the above is taken into consideration, it is preferable to perform background formatting in such a manner that the formatted portions are more effectively used, so that the formatting time at the time of disc ejection can be shortened more effectively.

According to an embodiment of the present invention, there is provided a recording apparatus for performing recording on a data-rewritable recording medium having a recording layer, the recording apparatus including: recording means for recording data on the recording layer; and control means for controlling the recording means so that dummy data is recorded in an order opposite to the order in which user data is recorded.

According to another embodiment of the present invention, there is provided a recording apparatus for performing recording on a data-rewritable recording medium having at least one recording layer, the recording apparatus including: recording means for recording data on each recording layer of the recording medium; and control means for controlling the recording means so that dummy data is recorded by targeting the same range as that in which user data is recorded in a first recording layer in which the user data is recorded for the first time.

In the manner described above, as a result of performing background formatting in an order opposite to the order in which user data is recorded, it is possible to make the formatted portions less likely to be overwritten by user data. As a result, background-formatted portions can be effectively used.

In particular, when the recording layer is formed as a multi-layer structure, after user data is recorded in the manner described above, the background formatting is performed by targeting a radial range that is the same as the radial range in which user data is recorded in a first recording layer sequentially from a recording layer in which user data should be recorded last.

Depending on specification, there are some cases in which media compatibility with a play-only apparatus can be ensured by recording dummy data in only the range in which user data is recorded in the first recording layer without completely filling in the entire area where user data is recorded.

In order to cope with a case in which such specification is adopted, uselessly formatted portions are likely to be eliminated as a result of the following: with respect to only the radial range where user data is recorded in the first recording layer, dummy data is recorded in the other recording layers in the manner described above, and thus background-formatted portions can be effectively used. At this time, since background formatting is performed sequentially from the recording layer in which user data should be recorded last in the manner described above, the background-formatted portions can be effectively used also in this case.

As described above, according to an embodiment of the present invention, background-formatted portions can be more effectively used, enabling portions that should be formatted at the ejection time to be smaller in number.

As a result, according to an embodiment of the present invention, when compared to the case of the related art, the time necessary for formatting, which should be performed when an optical disc recording medium is ejected, can be shortened.

### BRIEF DESCRIPTION OF THE DRAWINGS

Fig. 1 is a block diagram showing the internal configuration of a recording apparatus according to a first embodiment of the present invention;
Fig. 2 shows an area structure of an optical disc recording medium according to the first embodiment of the present invention;
Figs. 3A, 3B, and 3C illustrate a background formatting operation according to the first embodiment of the present invention;
Figs. 4A, 4B, and 4C illustrate operations to be performed in response to a disc ejection request for the purpose of demanding for media compatibility when specification that specifies an interchangeable radial position is adopted;
Figs. 5A, 5B, and 5C illustrate background formatting operations corresponding to a case in which specification that specifies an interchangeable radial position is adopted in the first embodiment of the present invention;
Fig. 6 is a schematic view showing the cross-sectional structure of an optical disc recording medium according to a second embodiment of the present invention;
Fig. 7 shows an area structure of an optical disc recording medium according to the second embodiment of the present invention;
Figs. 8A, 8B, and 8C illustrate background formatting operations according to the second embodiment of the present invention;
Figs. 9A and 9B illustrate background formatting operations corresponding to a case in which specification that specifies an interchangeable radial position is adopted in the second embodiment of the present invention;
Figs. 10A and 10B similarly illustrate background formatting operations corresponding to a case in which specification that specifies an interchangeable radial position is adopted in the second embodiment of the present invention;
Fig. 11 illustrates a background formatting technique of the related art; and
Fig. 12 illustrates effects of background formatting technique of the related art.

### DESCRIPTION OF THE PREFERRED EMBODIMENTS

Preferred embodiments of the present invention will now be described below.

### <First Embodiment>

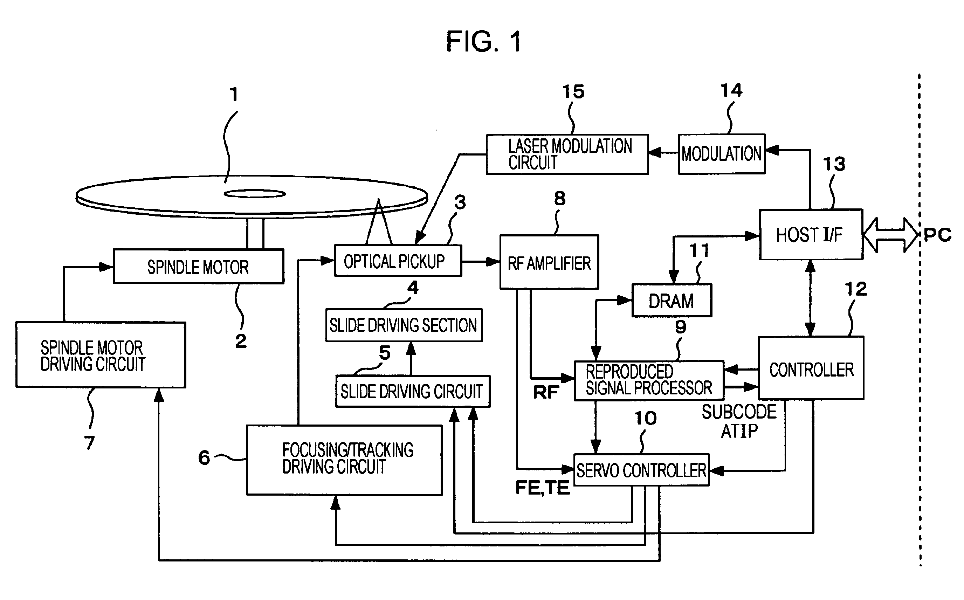

Fig. 1 is a block diagram showing the internal configuration of a disk drive apparatus, which is a recording apparatus, according to a first embodiment of the present invention.

A disc 1 shown in Fig. 1 is a data-rewritable disc of DVD (Digital Versatile Disc) system, having only one recording layer. More specifically, the disc 1 is a DVD+RW disc. In this case, the recording layer of the disk 1 is formed as a phase-change recording film.

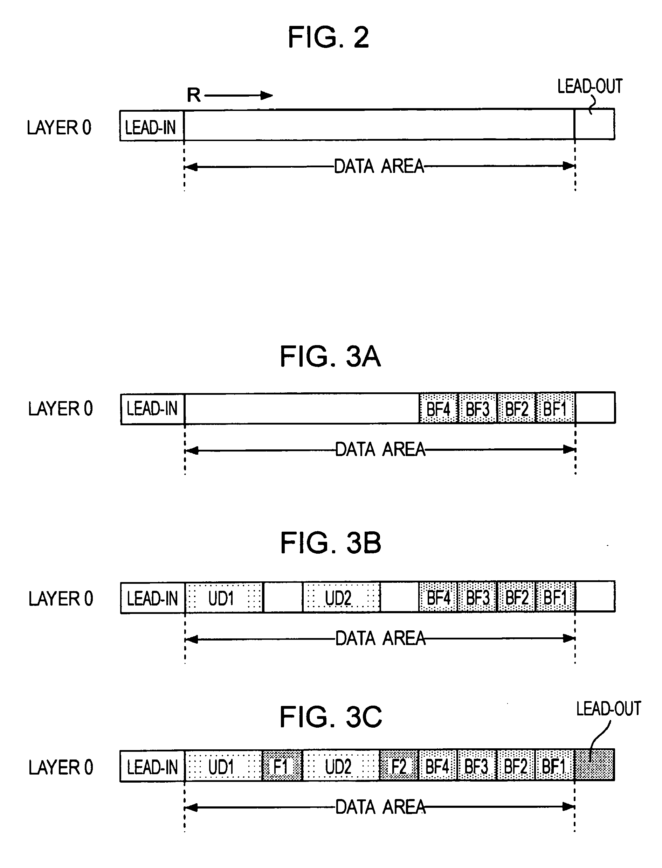

The area structure of the disk 1 in this case is as shown below in Fig. 2.

A lead-in area shown in Fig. 2 is located in the innermost peripheral portion of the disc 1. In the lead-in area, various kinds of information necessary for recording to and reproducing from the disc 1, such as information indicating the medium type of the disc 1 and management information, are recorded.

On the portion outside the lead-in area, a data area follows. This data area is an area where user data should be recorded. In the data area, user data is recorded from the inner peripheral portion toward the outer peripheral portion, as indicated by the direction of an arrow R.

With respect to the outermost peripheral portion of the disc 1, a lead-out area is provided. This lead-out area also has a function as a guard area and is an area where, for example, dummy data is recorded.

The description returns to Fig. 1.

The disc drive apparatus according to an embodiment of the present invention performs a formatting process of so-called background formatting as a recording apparatus serving such a disc 1, which is a DVD+RW disc.

The background formatting is such that, in an idle state in which a disc drive apparatus is not writing or reading data into or from the disc 1, dummy data is automatically recorded in the data area of the disc 1 for the purpose of making playback possible in a play-only apparatus.

The disc drive apparatus according to an embodiment of the present invention is configured as a so-called multidrive capable of recording and/or reproducing data into and/or from, in addition to the disc 1 of DVD+RW, a DVD disc such as a DVD-ROM disc, a DVD-R disc, a DVD+R disc, and a DVD-RW disc.

In Fig. 1, the disc 1 or another DVD disc (hereinafter also referred to collectively as a "disc") is placed in a turntable (not shown) and is rotationally driven at a constant linear velocity (CLV) or at a constant angular velocity (CAV) by means of a spindle motor 2 during a recording and reproduction operation. Then, data recorded in the form of embossed pits, in the form of dye-change pits, or in the form of phase-change pits on the disc is read by means of an optical pickup 3.

Inside the optical pickup 3, a laser diode serving as a laser light source, a photo-detector for detecting reflected light, an objective lens serving as an output end of laser light, an optical system for irradiating laser light onto a disc recording surface via the objective lens and for guiding the reflected light to a photo-detector, a two-axis mechanism for movably holding the objective lens in the tracking direction and in the focusing direction, and the like are formed.

The entire optical pickup 3 is movable in the radial direction of the disc by means of a slide driving section 4.

Reflected light from the disc is detected by means of a photo-detector, is converted into an electrical signal in response to the amount of the received light, and is supplied to an RF amplifier 8.

The RF amplifier 8 includes an electrical current/voltage conversion circuit, a matrix computation/amplifying circuit, and the like in such a manner as to correspond to an electrical current output from a plurality of photo-detectors inside the optical pickup 3, and generates a necessary signal on the basis of a matrix computation process. For example, an RF signal, which is a reproduced signal, a focusing error signal FE and a tracking error signal TE for the purpose of servo control, and the like are generated.

The reproduced signal (RF signal) output from the RF amplifier 8 is supplied to a reproduced signal processor 9, and the focusing error signal FE and the tracking error signal TE are supplied to a servo controller 10.

The reproduced RF signal obtained by the RF amplifier 8 is subjected to binarization, PLL clock generation, a decoding process on an EFM + signal (8-16 modulation signal), an error correction process and the like by means of the reproduced signal processor 9.

The reproduced signal processor 9 performs a decoding process and an error correction process by using a DRAM 11. The DRAM 11 is also used as a cache for storing data obtained from a host interface 13 and for transferring data to a host computer.

The reproduced signal processor 9 stores the decoded data in the DRAM 11 serving as a cache memory.

As a reproduced output from this disc drive apparatus, data buffered in the DRAM 11 is read, and is transferred and output.

In the reproduced signal processor 9, subcode information, ATIP (Absolute Time In Pregroove) information, LPP (Land Pre-Pit) information, ADIP (ADdress In Pregroove) information, sector ID information, and the like are extracted from the information obtained by EFM + demodulation and error correction on the RF signal, and these pieces of information are supplied to a controller 12.

The controller 12 is formed of, for example, a microcomputer, and controls the entire apparatus. In particular, in this case, the above-described background formatting is performed under the control of the controller 12. That is, in response to the fact that an idle state in which the disc 1 is neither written nor read is reached, the controller 12 controls each of the necessary sections so that the recording of dummy data is performed. That is, a modulator 14 generates modulation data of dummy data (for example, all "0" data), and performs access execution control on the servo controller 10 so that an operation of recording the modulation data of the dummy data is performed.

At this time, the controller 12 records the dummy data as background formatting by using blocks BF, which are predetermined recording units, as minimum units. The minimum units for recording dummy data in this case are assumed to be based on, for example, one ECC (Error Correcting Code) block (16 sectors).

At this time, the recording of the dummy data is performed in accordance with a preset predetermined order. The controller 12 records the dummy data in a preset suitable order on the basis of information indicating the order in which dummy data is recorded (recording order information) on such a disc 1, the information being stored in, for example, the ROM contained in the controller 12.

The host interface 13 is connected to a host apparatus, such as an external personal computer, and communicates reproduction data, a read/write command, and the like with the host apparatus.

That is, reproduction data stored in the DRAM 11 is transferred and output to the host apparatus via the host interface 13.

The read/write command, the recording data, and other signals from the host apparatus are buffered in the DRAM 11 via the host interface 13 and/or are supplied to the controller 12.

Recording on the disc is performed as a result of the write command and the recording data being supplied from the host apparatus.

When the data is to be recorded, processing for recording purposes is performed on the recording data buffered in the DRAM 11 by the modulator 14. That is, processing, such as error correction code addition and EFM + modulation, is performed.

The recording data modulated in this manner is supplied to a laser modulation circuit 15. The laser modulation circuit 15 drives a semiconductor laser inside the optical pickup 3 on the basis of the recording data, so that the semiconductor laser performs laser output on the basis of the recording data and data is written on the disc.

During the recording operation, the controller 12 performs control so that laser light is irradiated onto a recording area of the disc with a recording power from the optical pickup 3.

When the disc is a write-once-type in which a dye-change film is a recording layer, pits due to changes in dye are formed as a result of the laser irradiation of the recording power.

When the disc is a rewritable disc having a phase-change recording film like the disc 1 according to an embodiment of the present invention, the crystal structure of the recording layer is changed as a result of heating by laser light, and phase-change pits are formed. That is, various kinds of data are recorded by changing presence or absence of pits and the length thereof. Furthermore, laser light is irradiated again onto a portion where pits are formed, the crystal state that was changed when data was recorded returns to the original state as a result of heating, and the pits are lost, thereby erasing the data.

The servo controller 10 generates various kinds of servo driving signals for focusing, tracking, slide, and spindle on the basis of a focusing error signal FE and a tracking error signal TE from the RF amplifier 8 and on the basis of a spindle error signal SPE from the reproduced signal processor 9 or the controller 12, so that servo operation is performed.

That is, a focusing driving signal and a tracking driving signal are generated on the basis of the focusing error signal FE and the tracking error signal TE, and are supplied to the focusing/tracking driving circuit 6. The focusing/tracking driving circuit 6 drives the focusing coil and the tracking coil of the two-axis mechanism in the optical pickup 3. As a result, a tracking servo loop and a focus servo loop of the optical pickup 3, the RF amplifier 8, the servo controller 10, the focusing/tracking driving circuit 6, and the two-axis mechanism are formed.

When the focusing servo is to be turned on, first, a focus search operation needs to be performed. The focus search operation detects a position at which an S-shaped curve of the focusing error signal FE is obtained while forcedly moving the objective lens in a focus servo off state. As is well known, a linear area within the S-shaped curve of the focusing error signal is a range in which the position of the objective lens is pulled into a focused position by closing the focus servo loop. Therefore, as a result of detecting a range in which the position of the objective lens can be pulled in while forcedly moving the objective lens in the focus search operation and as a result of turning on the focus servo at the timing of the detection, hereinafter, a focus servo operation in which a laser spot is held in a focused state is realized.

The servo controller 10 further supplies a spindle driving signal generated in response to the spindle error signal SPE to the spindle motor driving circuit 7. In response to the spindle driving signal, the spindle motor driving circuit 7 applies, for example, a 3-phase driving signal to the spindle motor 2 so that the spindle motor 2 is rotated. Furthermore, in response to a spindle kicking/braking control signal from the controller 12, the servo controller 10 generates a spindle driving signal so that the operation of the spindle motor 2, such as start-up, stopping, acceleration, or deceleration, is performed by the spindle motor driving circuit 7.

Furthermore, the servo controller 10 generates, for example, a slide error signal obtained as low frequency components of the tracking error signal TE, and a slide drive signal under access execution control from the controller 12, and supplies them to the slide driving circuit 5. The slide driving circuit 5 drives the slide driving section 4 in response to the slide drive signal. Although not shown in Fig. 1, the slide driving section 4 has a mechanism formed of a main shaft for holding the optical pickup 3, a sled motor, transmission gears, and the like. The slide driving circuit 5 drives the slide driving section 4 in response to the slide drive signal, so that intended slide movement of the optical pickup 3 is performed.

In Fig. 1, a case in which the disc drive apparatus is configured as an externally provided drive apparatus of the host apparatus (information processing apparatus), such as a personal computer, is described as an example. In addition, the disk drive apparatus can also be configured as a disc drive apparatus incorporated in the information processing apparatus.

Here, the optical disc drive apparatus serves only a DVD-system disc. Alternatively, the optical disc drive apparatus may be configured to serve another optical disc recording medium, such as a CD (Compact Disc).

At the present situation, in a DVD+RW disc having only one recording layer, background formatting is performed so that dummy data is recorded sequentially from the inner peripheral portion in accordance with the order in which user data is recorded (see Fig. 11).

However, as a result of performing background formatting in accordance with the order in which user data is recorded in the manner described above, when user data is recorded in the manner as shown in Fig. 12, the possibility that the formatted portions are overwritten becomes high and the formatted portions are likely not to be effectively used. When the above is taken into consideration, it is preferable to perform background formatting in such a manner for the formatted portions as to be more effectively used, so that the formatting time at the time of disc ejection can be shortened more effectively.

Therefore, in an embodiment of the present invention, background formatting is performed in an order opposite to the order in which user data is recorded.

Such a formatting operation in an embodiment of the present invention will now be described below with reference to Figs. 3A, 3B, and 3C.

As shown in Fig. 3A, in this case, background formatting is performed from the outermost peripheral portion of the data are in an order opposite to the order in which user data is recorded. This corresponds to that background formatting is performed sequentially from an area where the possibility that the user data is recorded is low.

As is also described above, background formatting is performed in units of predetermined blocks BF. It is assumed here that, as shown in Figs. 3A, 3B, and 3C, background formatting is performed from a block BF1 to a block BF4.

It is assumed that the recording of a particular data file as user data is instructed from the state shown in Fig. 3A, and user data UD1 and user data UD2 are recorded, as shown in Fig. 3B. It is assumed that, after this recording, a disc ejection request for the purpose of demanding for media compatibility with the play-only apparatus is made.

Here, it is considered that, in order to ensure media compatibility with the play-only apparatus, basically, it is necessary to completely fill in all the unrecorded portions within the data area by using dummy data. Here, in order to deal with the case, with respect to the eject request, as shown in Fig. 3C, a formatting process is performed on the area (F1 in Fig. 3C) between the user data UD1 and the user data UD2 and on the area (F2 in Fig. 3C) between the user data UD2 and the block BF4. After that, as a result of recording necessary data, such as user data, by targeting a predetermined outer peripheral area of the data area, a lead-out area shown in Fig. 3C is added. As a result, media compatibility with the play-only apparatus is ensured.

In the manner described above, since background formatting in this embodiment is performed in an order opposite to the order in which the user data is recorded, when the user data is recorded, it is also possible to make the formatted portions less likely to be overwritten. That is, when compared to the case of the related art, in which background formatting is performed in the same order as the order in which user data is recorded, the background-formatted portions can be more effectively used. As a result, formatting time necessary at the time of disc ejection can also be shortened further.

For the sake of confirmation, the order in which dummy data is recorded as background formatting is determined on the basis of the recording order information contained in the controller 12, as is also described above. Therefore, when background formatting as the above-described embodiment is to be realized, as the recording order information, information indicating the order exactly opposite to the information indicating the order in which user data is recorded should only be stored.

The above description is given on the assumption that, in order to ensure media compatibility with a play-only apparatus, the data area needs to be completely filled in with dummy data. However, depending on specification, there are some cases in which, when data is recorded beyond a predetermined radial position, media compatibility can be ensured by adding a lead-out area to the end of the recorded data.

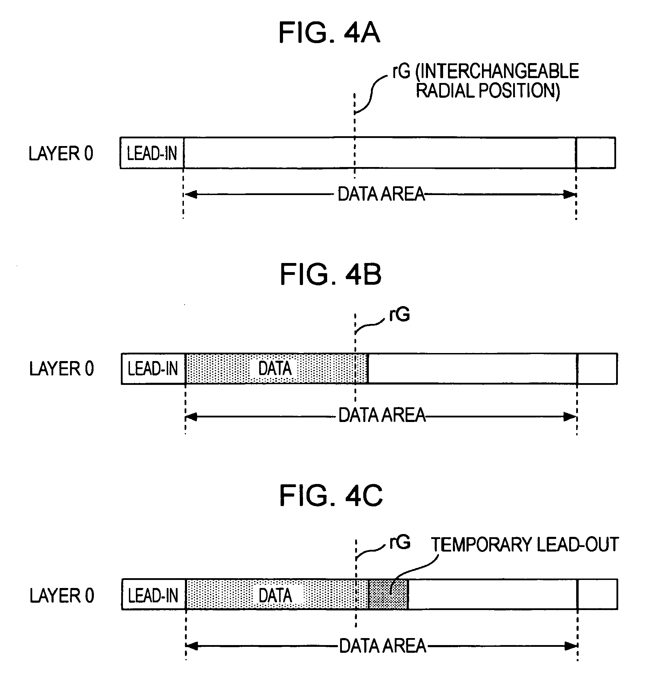

Operations when such a specification is adopted will now be described below with reference to Figs. 4A, 4B, and 4C. First, as shown in Fig. 4A, a predetermined radial position on the disc 1 is defined as an interchangeable radial position rG.

As shown in Fig. 4B, when data is recorded beyond the interchangeable radial position rG, and thereafter when a disc ejection request for the purpose of demanding for media compatibility is made, media compatibility with the play-only apparatus is ensured by only adding a temporary lead-out area, as shown in Fig. 4C.

As an example, regarding media compatibility with a DVD-ROM, there is a specification such that a radius of 30 mm to 35 mm is defined as the interchangeable radial position rG.

Also in the case of such specification, as a result of performing background formatting in an order opposite to the order in which the user data is recorded, the formatted portions can be effectively used.

However, in this case, if the background formatting is performed from the area where the user data should be recorded last as shown in Fig. 3C, the formatted portions on the portion outside the interchangeable radial position rG becomes wasted, and the formatted portions are not effectively used.

Therefore, in this case, background formatting is performed in an order opposite to the order in which the user data is recorded sequentially from the interchangeable radial position rG rather than from the area where the user data should be recorded last. As a result, when the user data is recorded only in a range less than the interchangeable radial position rG, the formatted portions can be effectively used, with the result that the formatting time necessary at the time of disc ejection can also be shortened.

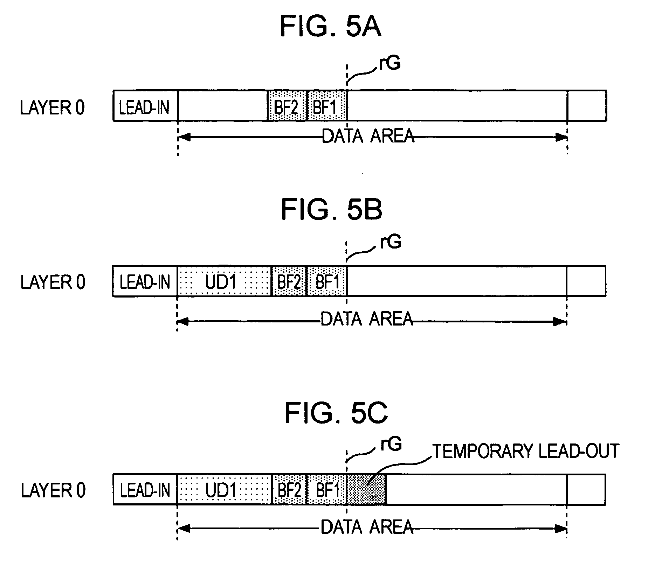

Operations corresponding to such a case in which the interchangeable radial position rG is defined will now be described with reference to Figs. 5A, 5B, and 5C.

Initially, in Fig. 5A, as is also described above, in this case, background formatting is performed in an order opposite to the order in which the user data is recorded. It is assumed here that formatting is performed from the block BF1 to the block BF2 as shown in Fig. 5A.

It is assumed that, as shown in Fig. 5B, from this state, user data UD1 is recorded, for example, up to the middle of the block BF2. Then, after the recording of the user data UD1, a disc ejection request for the purpose of demanding for media compatibility is assumed to be made.

In response to this request, as shown in Fig. 5C, a process for adding a temporary lead-out on the portion outside the interchangeable radial position rG is performed. As a result, in this case, media compatibility with the play-only apparatus is ensured.

When the background formatting of the related art is adopted, background formatting is performed in accordance with the order in which the user data is recorded. Therefore, when the user data UD1 is recorded as in the example shown in Fig. 5B, under the condition in which the same background formatting for two blocks BF is performed, it is a matter of course that the formatted portions corresponding to the blocks BF1 and BF2 are not obtained.

When compared to this, according to this example in which background formatting is performed in an order opposite to the order in which the user data is recorded sequentially from the interchangeable radial position rG in the manner described above, it is possible to make the background-formatted portions less likely to be overwritten by the user data UD1, and thus the background-formatted portions can be used more effectively. That is, as a result, the formatting time necessary at the time of disc ejection can be shortened further.

Here, an example is shown in which the user data UD1 is recorded in a range less than the interchangeable radial position rG. However, when the user data UD1 is recorded in a range beyond the interchangeable radial position rG, for both the case of this example and the case of the related art, only the process for adding a temporary lead-out becomes necessary at the time of disc ejection. That is, in such a case, there is no difference between the case of this example and the case of the related art in the effective use of the background-formatted portions. After all, in this example in which the formatted portions can be effectively used when the user data UD1 is recorded in a range in which the interchangeable radial position rG is not reached in the manner described above, in general, the background-formatted portions can be effectively used more than in the related art.

As a result, in the case of this example, the formatting time necessary at the time of disc ejection can be shortened further.

When the background formatting operation in this case is to be implemented, as the recording order information to be stored by the controller 12, together with information indicating an order opposite to the order in which the user data is recorded, information indicating the block BF in which the predetermined interchangeable radial position rG is an end needs only to be stored. On the basis of this information indicating the block BF in which the predetermined interchangeable radial position rG is an end, the controller 12 can perform control so that background formatting is performed in an order opposite to the order in which the user data is recorded sequentially from the interchangeable radial position rG.

### <Second Embodiment>

Up to this point, operations corresponding to a case in which the disc 1 is a single-layer disc having only one recording layer have been described. Alternatively, the disc 1 may be assumed to be a multi-layer disc having a plurality of recording layers.

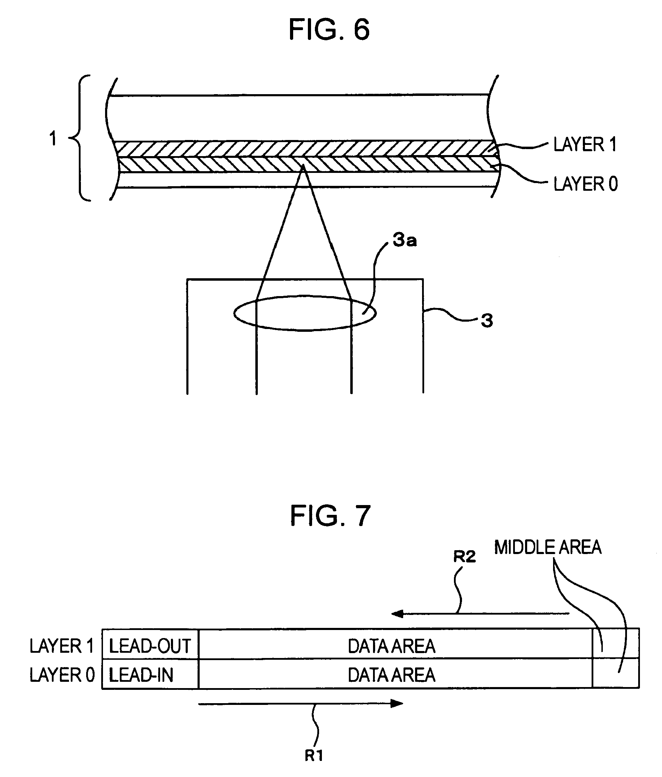

Fig. 6 shows the cross-sectional structure of the disc 1, which is such a multi-layer disc.

The disc 1 in this case is configured as a data-rewritable multi-layer DVD+RW disc having a plurality of recording layers.

For the sake of description, the disc 1 is provided with only two recording layers: a first recording layer (layer 0) and a second recording layer (layer 1).

In this case, the two recording layers are phase-change recording films, and the two recording layers are layered with a comparatively small spacing.

As shown in Fig. 6, the first recording layer is closer to an objective lens 3a inside the optical pickup 3 of the disc drive apparatus, and the second recording layer is farther from the objective lens 3a.

When recording is to be performed on such a two-layer disc, laser light that exits from the optical pickup 3 of the disc drive apparatus via the objective lens 3a is focused onto one of the recording layers, and a signal is recorded in that recording layer.

Fig. 7 shows the area structure of the disc 1 in this case. In the disc 1, opposite track paths are employed as a recording method.

In the opposite track paths, as indicated by the arrows R1 and R2 in Fig. 7, the user data is recorded from the inner peripheral portion of the first recording layer up to the end of the first recording layer, and thereafter, the user data is recorded from the outer peripheral portion of the second recording layer to the inner peripheral portion thereof.

In this case, in the first recording layer in which data should be recorded first, a lead-in area → a data area → a middle area are formed from the inner peripheral portion toward the outer peripheral portion. In the second recording layer, a middle area → a data area → a lead-out area are formed from the outer peripheral portion toward the inner peripheral portion.

The middle area is added to an area on the portion outside the interlayer wraparound portion. Such a middle area is provided due to the following reasons. In the play-only apparatus, since pits recorded on a disc surface are read, servo is not applied in an area having no pits, and it is difficult to stably read data. Therefore, as an area for guarding purposes, for example, an area in which dummy data is recorded becomes necessary.

When the disc 1 is formed as a multi-layer disc in this manner, the disc drive apparatus needs to be configured so as to serve a multi-layer disc rather than being configured as is described with reference to Fig. 1.

That is, when recording and reproduction is to be performed on and from the first recording layer, laser light needs to be focused onto the first recording layer. When recording and reproduction is to be performed on and from the second recording layer, laser light needs to be focused onto the second recording layer. In order that the focus position can be moved between the first recording layer and the second recording layer, the disc drive apparatus in this case is configured so that a focusing/jumping operation is possible.

The focus-jumping operation is performed as a result of the following: when a focused state is reached in one of the recording layers, the objective lens is forcedly moved with focus servo being turned off, and the focus servo is turned on when the objective lens reaches the focus pull-in range with respect to the other recording layer (when an S-shaped curve is observed). Such a focus-jumping operation is performed by the operation of the focus servo loop system of the servo controller 10 - the focusing/tracking driving circuit 6 - the optical pickup 3 - the RF amplifier 8 in response to, for example, instructions to the servo controller 10 of the controller 12.

Even if the recording layer is formed as a multi-layer structure, as a result of performing background formatting in an order opposite to the order in which the user data is recorded as described with reference to Fig. 7, the background-formatted portions can be used more effectively than in a case in which the method of the related art is adopted.

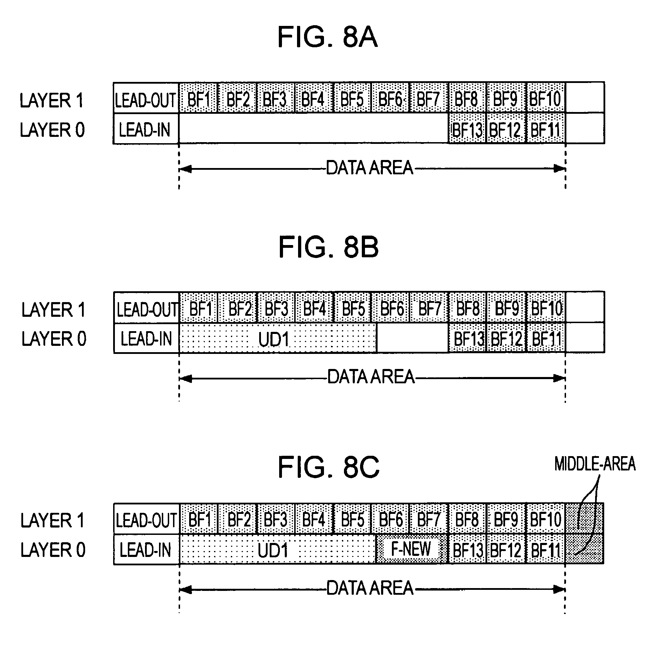

That is, as shown in Fig. 8A, in this case, background formatting is performed in an order opposite to the order in which user data is recorded for each block BF sequentially from the outermost peripheral portion (i.e., the area where user data should be recorded last) of the data area of the second recording layer (layer 1).

At this time, the background formatting is assumed to be performed on the entire data area of the second recording layer (blocks BF1 to BF10) as shown in Fig. 8A, and after wrapping around to the first recording layer, the background formatting is performed on blocks BF11 to BF13. Furthermore, from this state, as shown in Fig. 8B, the user data UD1 is assumed to be recorded, and furthermore, after the recording, a disc ejection request for the purpose of demanding media compatibility is assumed to be made.

In response to this, as shown in Fig. 8C, unrecorded portions between the end of the recorded user data UD1 in the first recording layer and the start position of the block BF13 in which background formatting has been performed are formatted (F-new in Fig. 8C). Furthermore, a process for adding a middle area is performed on the outer peripheral portion of the interlayer wraparound portion between the first recording layer and the second recording layer. As a result, it is possible to ensure media compatibility with a play-only apparatus.

If the recording layer is formed as a multi-layer structure, since background formatting is performed in an order opposite to the order in which the user data is recorded sequentially from the area where the user data is recorded in the manner described above, it is possible to make the formatted portions less likely to be overwritten by the user data. As a result, the background-formatted portions can be effectively used. That is, the formatting time necessary at the time of disc ejection can be shortened.

In Figs. 8A, 8B, and 8C, an example in which the recording layer is formed as a two-layer structure is shown. In addition, when the recording layer is formed as a three or more layer structure, similarly, as a result of performing background formatting in an order opposite to the order in which the user data is recorded sequentially from the area in which the user data should be recorded last, the advantages identical to those described above can be obtained.

Here, as the disc 1, an example in which opposite track paths are adopted is shown. Alternatively, when parallel track paths in which user data is recorded in the same direction in all the recording layers are adopted, as a result of performing background formatting in an order opposite to the order in which user data is recorded sequentially from the area in which the user data should be recorded last in a similar manner, it is similarly possible to make the formatted portions less likely to be overwritten by user data. As a result, the background-formatted portions can be effectively used.

Even in a case where the recording layer is formed as a multi-layer structure, when the interchangeable radial position rG is defined and data is recorded up to this interchangeable radial position rG, it can be assumed that a specification in which media compatibility is maintained by adding a temporary middle area even if the area ahead of that position is not formatted is adopted.

However, when the recording layer is formed as a multi-layer structure, in order to obtain media compatibility with a play-only apparatus, at the minimum, with respect to the range up to the radial position at which user data is recorded in the first recording layer, it is difficult to ensure a stable playback operation unless dummy data is recorded in all the other recording layers. That is, in a multi-layer disc, in a case where the interchangeable radial position rG is defined in the manner described above in order to reduce the area that needs to be formatted at the time of disc ejection, when user data has been recorded, at the minimum, with respect to the same range as the range in which user data is recorded in the first recording layer, that range needs to be completely filled in by dummy data.

In other words, in this case, when the user data has been recorded, if, with respect to the same range as the range in which the user data is recorded in the first recording layer, dummy data is recorded in all the other recording layers (in practice, a temporary middle area needs to be added), it is possible to ensure media compatibility with a play-only apparatus.

Therefore, in order to deal with a case where, as a multi-layer disc, the interchangeable radial position rG is defined and an area that needs to be formatted at the time of disc ejection in the manner described above to be reduced, by targeting only the same radial range as the radial range in which user data is recorded in the first recording layer, background formatting is performed in all the other recording layers. In this case, the background formatting is performed sequentially from the recording layer in which the user data should be recorded last.

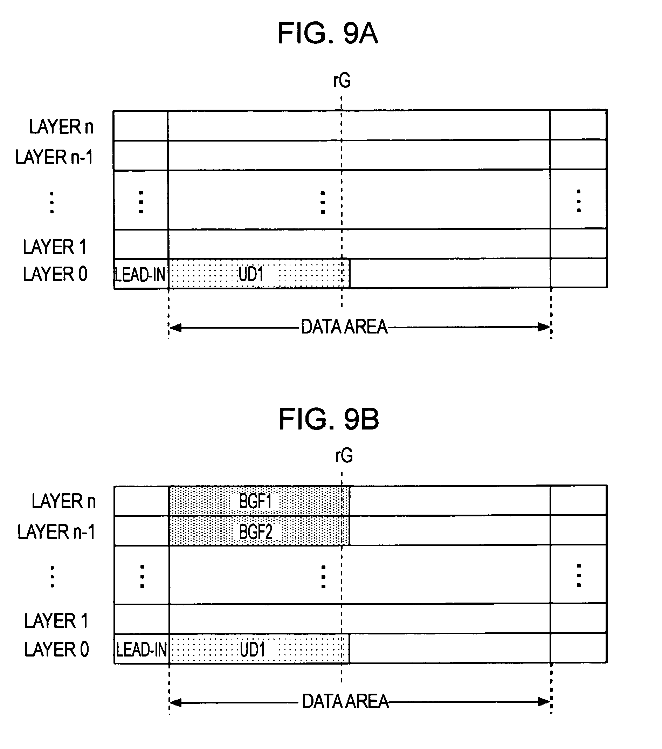

Operations in this case will be described below with reference to Figs. 9A and 9B.

In Figs. 9A and 9B, by assuming that the disc 1 is an n-layer disc having n recording layers, the area structure thereof is shown. Also, in this case, an example is shown in which the lead-in area of a first recording layer is formed in the innermost peripheral portion of the disc 1, and for the order in which user data is recorded, opposite track paths are adopted.

First, the operation in this case is assumed to be performed after some user data is recorded in a data area. That is, a background formatting operation is performed in response to the fact that an idle state is reached after some user data is recorded.

Here, as shown in Fig. 9A, for example, user data UD1 is assumed to be recorded up to the middle of the first recording layer in such a manner as to exceed the interchangeable radial position rG.

In response to the fact that, as shown in Fig. 9A, the user data UD1 is recorded and thereafter the disk drive apparatus is placed in an idle state, as shown in Fig. 9B, background formatting is performed by targeting the same radial range as the radial range in which user data is recorded in the first recording layer sequentially from the n-th recording layer in which user data should be recorded last (in Fig. 9B, in the order of BGF1 → BGF2...).

As described above, as a result of performing background formatting in each recording layer by targeting the same radial range as the radial range in which user data is recorded in the first recording layer, it is difficult to perform useless formatting in an area ahead of the interchangeable radial position rG (i.e., on the portion outside the interchangeable radial position rG in this case).

After that, as a result of performing background formatting sequentially from the recording layer in which user data should be recorded last in the manner described above, the formatted portions can be effectively used due to the same reasons as those described above.

Furthermore, in this case, if the background formatting is performed sequentially from the recording layer in which the user data should be recorded last in the n-th recording layer, the formatted portions can likely be effectively used further.

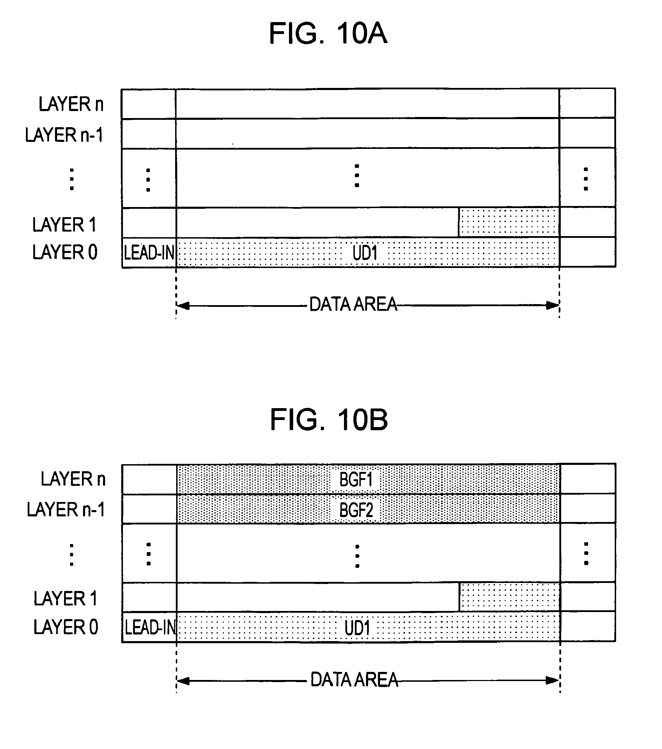

In the foregoing, a case in which the recording of the user data in the first recording layer is stopped in the middle of the data area is described as an example. For the sake of confirmation when the data area of the first recording layer is completely filled in by user data, for example, when, as shown in Fig. 10A, the recording of the user data UD1 is performed up to the second recording layer, background formatting is performed by targeting the entire data area in each layer sequentially from the n-th recording layer (BGF1 → BGF2...), as shown in Fig. 10B.

That is, in this case, since the recording range of the user data in the first recording layer becomes the entire data area, background formatting is performed by targeting the entire data area with respect to the same radial range for each layer.

In Figs. 9A and 9B and Figs. 10A and 10B, a description has been given of only the operation after user data is recorded beyond the interchangeable radial position rG. Alternatively, in response to an idle state after user data is recorded in a range less than the interchangeable radial position rG, similarly, background formatting in each layer may be performed sequentially from the n-th recording layer with respect to the same range as the range in which user data is recorded in the first recording layer.

In the case in which the method of the related art is adopted, since background formatting is performed in the order in which the user data is recorded, the background formatting is performed sequentially from the end of the recorded user data. According to this, when user data is additionally written later, the background-formatted portions becomes wasted in the same manner as is before. Even if the user data is not additionally written, as a result of performing background formatting from the end of the recorded data in the manner described above, there is a possibility that formatting is performed beyond the interchangeable radial position rG. In that case, useless formatting is performed.

In comparison, according to the above-described operation of this example, background formatting is performed sequentially from the n-th recording layer by targeting the same range as the range in which user data is recorded in the first recording layer. Therefore, in both cases in which user data is additionally written or is not additionally written, when compared to the case in which the method of the related art is adopted, uselessly formatted portions are likely to be avoided. As a result, the formatting time necessary at the time of disc ejection is also likely to be shortened in comparison with the case in which the method of the related art is adopted.

In Figs. 9A and 9B and Figs. 10A and 10B, a case in which opposite track paths are adopted as the disc 1 is shown. Alternatively, also, in the case where parallel track paths are adopted, if, similarly, background formatting is performed by targeting the same radial range as the radial range in which user data is recorded in the first recording layer sequentially from the n-th recording layer in which user data should be recorded last in response to the fact that the disk drive apparatus is placed in an idle state after the user data is recorded, the formatting time necessary at the time of disc ejection can be shortened so that the background-formatted portions can be effectively used in a similar manner.

The above-described operation "background formatting is performed by targeting the same radial range as the radial range in which the user data is recorded in the first recording layer sequentially from the n-th recording layer in which the user data should be recorded last in response to the fact that the disk drive apparatus is placed in an idle state after the user data is recorded" is performed under the control of the controller 12.

In this case, in response to the fact that user data is recorded on the disc 1, the controller 12 obtains and holds the information on the radial position of the end of the recorded user data in the first recording layer. Thereafter, in response to becoming an idle state, the controller 12 controls each of the necessary sections so that background formatting is performed sequentially from the n-th recording layer with respect to the range up to this held radial position.

For the sake of confirmation, as has been performed before, background formatting is performed in such a manner as to avoid a range in which user data has already been recorded. Therefore, in the background formatting of this example, background formatting is performed in such a manner as to avoid such a range. The operation thereof is well known, and a detailed description thereof is omitted herein.

In each of the above-described embodiments, the present invention is applied to a DVD+RW disc. In addition, the present invention can be suitably applied to other rewritable discs, such as a DVD-RW disc and a CD-RW disc.

It should be understood by those skilled in the art that various modifications, combinations, sub-combinations and alterations may occur depending on design requirements and other factors insofar as they are within the scope of the appended claims or the equivalents thereof.

## Claims

1. A recording apparatus for performing recording on a data-rewritable recording medium (1) having a recording layer, the recording apparatus comprising:
recording means for recording data on the recording layer; and
control means (12) for controlling the recording means so that dummy data is recorded in an order opposite to the order in which user data is recorded.

2. The recording apparatus according to Claim 1, wherein the control means (12) controls the recording means so that the dummy data is recorded from an area where the user data is recorded last or is recorded from an area of a predetermined radial position.

3. A recording method for use with a recording apparatus for performing recording on a data-rewritable recording medium having at least one recording layer, the recording method comprising the step of:
recording dummy data in an order opposite to the order in which user data is recorded.

4. A recording apparatus for performing recording on a data-rewritable recording medium (1) having at least one recording layer, the recording apparatus comprising:
recording means for recording data on each recording layer of the recording medium (1); and
control means for controlling the recording means so that dummy data is recorded by targeting the same range as that in which user data is recorded in a first recording layer in which the user data is recorded for the first time.

5. The recording apparatus according to Claim 4, wherein the control means (12) controls the recording means so that the dummy data is recorded according to anyone of the group comprising (a) from an area where the user data is recorded last in the recording layer in which the user data is recorded last (b) after the user data is recorded on the recording medium (c) sequentially from the recording layer in which the user data is recorded last (d) at the same position as the position at which the user data is recorded in the first recording layer in which the user data is recorded, and/or (e) from the same position as the radial position of the recording medium (1) on which the user data is recorded in the recording layer in which the user data is recorded.

6. A recording method for use with a recording apparatus for performing recording on a data-rewritable recording medium having at least one recording layer, the recording method comprising the step of:
recording dummy data by targeting the same range as that in which user data is recorded in a first recording layer in which the user data is recorded for the first time.

7. A recording apparatus for performing recording on a data-rewritable recording medium (1) having at least one recording layer, the recording apparatus comprising:
a recorder configured to record data on the recording layer; and
a controller (12) configured to control the recorder so that dummy data is recorded in an order opposite to the order in which user data is recorded.
